# EUROPEAN PATENT APPLICATION

(11) **EP 4 592 790 A1**
(43) Date of publication of application: **30.07.2025**
(21) Application number: 23868207.4
(22) Date of filing: 20.09.2023
(51) Int. Cl.: G05F 1/67

(54) **POWER CONVERSION DEVICE**

(30) Priority: 21.09.2022 JP 2022149987
(71) Applicant: GS Yuasa International Ltd., Kisshoin, Minami-ku, Kyoto-shi, Kyoto 601-8520 (JP)
(72) Inventor: SHIMAO Toshihiro, Kyoto-shi, Kyoto 601-8520 (JP); TAKAGI Kazuto, Kyoto-shi, Kyoto 601-8520 (JP); ITO Yoichi, Kyoto-shi, Kyoto 601-8520 (JP)
(74) Representative: Grünecker Patent- und Rechtsanwälte PartG mbB
(86) International application number: PCT/JP2023/034064
(87) International publication number: WO 2024/063086

(57) **Abstract**

A power converting device (10) includes a diode (20) configured to prevent backflow to a power generating device (2), and a converter (40) configured to convert power generated by the power generating device (2) into power suitable for a load (3). The power converting device (10) includes a capacitor (30) connected to a wiring line connecting the diode (20) and the converter (40). The converter (40) is configured to change a capacitor voltage (Vc) of the capacitor (30) with maximum power point control (MPPT control), and is configured to receive power at an operating point of the power generating device (2) determined by the capacitor voltage (Vc).

## Description

### TECHNICAL FIELD

The present invention relates to a power converting device that causes power generated by a power generating device to be converted into power suitable for a load.

### BACKGROUND ART

In recent years, a solar cell has been in widespread use. However, power generated by the solar cell is affected by environmental conditions such as seasons and weather, and insufficient generated power that is weak is obtainable under adverse conditions. The weak generated power is lost in a power conditioner, a DC-DC converter, or the like, and thus the weak generated power is actually unusable. A technique has been proposed in which a weak current generated by power generation is efficiently collected by a capacitor and power generated by a solar cell is efficiently used (see, for example, Patent Document 1).

In Patent Document 1, a capacitor is included, which is connected to a solar cell. When an amount of power generated by the solar cell exceeds a predetermined value, the power from the solar cell is supplied to a load, and when the amount of power generated by the solar cell is equal to or lower than the predetermined value, the capacitor is charged with the power from the solar cell.

### PRIOR ART DOCUMENT

### PATENT DOCUMENT

Patent Document 1: JP-A-2018-129980

### SUMMARY OF THE INVENTION

### PROBLEMS TO BE SOLVED BY THE INVENTION

In the conventional technique, a switch element is turned on and off in accordance with the amount of power generated by the solar cell, whereby control is performed as to whether the capacitor is charged or not. It is necessary to perform complicated work of setting an appropriate threshold for turning on and off the switch element. The on and off operation of the switch element takes a period during which a power conditioner or a DCDC converter is stopped, and the generated power is lost by being not feedable to the load.

One aspect of the present invention provides a power converting device capable of utilizing weak power from a power generating device by charging a capacitor with the weak power, without using a switch element.

### MEANS FOR SOLVING THE PROBLEMS

One aspect of the present invention is a power converting device configured to cause power generated by a power generating device to be converted into power suitable for a load. The power converting device includes a diode configured to prevent backflow to the power generating device and a converter configured to convert the power generated by the power generating device into the power suitable for the load. The power converting device includes a capacitor connected to a wiring line connecting the diode and the converter. The converter is configured to change a capacitor voltage of the capacitor with maximum power point control, and is configured to receive power at an operating point of the power generating device determined by the capacitor voltage.

### BRIEF DESCRIPTION OF THE DRAWINGS

Fig. 1 is a diagram illustrating a circuitry configuration of an embodiment of a power converting device.
Fig. 2 is a diagram illustrating an operation of a converter illustrated in Fig. 1.
Fig. 3 is a diagram illustrating a relationship between generated power and a capacitor voltage.
Fig. 4 is a diagram illustrating a P-V characteristic of a power generating device.
Fig. 5 is a diagram illustrating a circuitry configuration of a power converting device according to a second embodiment.
Fig. 6 is a diagram illustrating a circuitry configuration of a power converting device according to a third embodiment.
Fig. 7 is a diagram illustrating a PV characteristic of a power generating device according to the third embodiment.

### MODE FOR CARRYING OUT THE INVENTION

### (First Embodiment)

Hereinafter, an embodiment of the present invention will be described in detail with reference to the drawings. In the following embodiments, components exhibiting similar functions are denoted by an identical reference sign, and the description thereof will be omitted as appropriate.

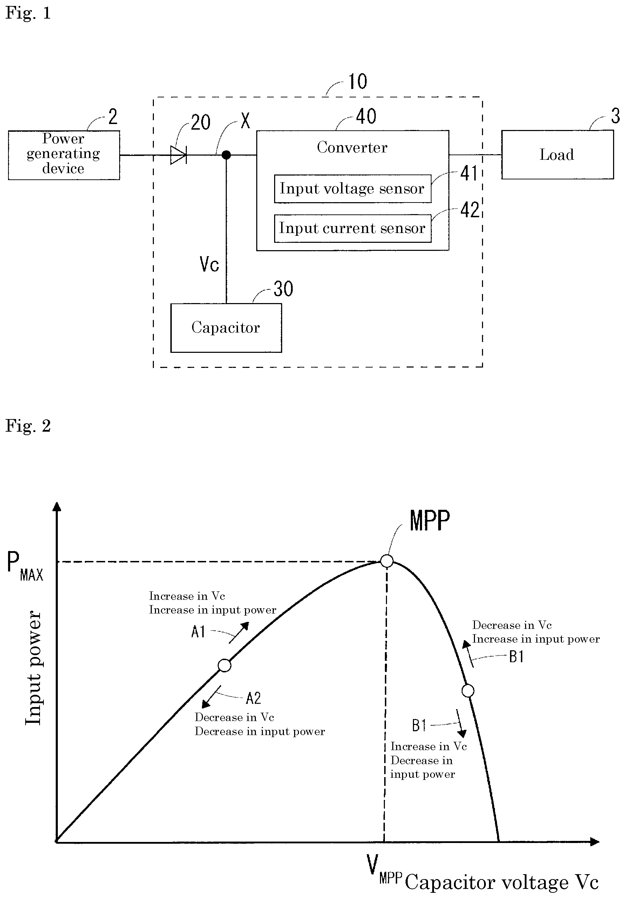

Referring to Fig. 1, a power converting device 10 of the present embodiment is a device that causes power generated by a power generating device 2 to be converted into power suitable for a load 3. The power converting device 10 includes a diode 20, a capacitor 30, and a converter 40.

The power generating device 2 for which conversion is performed by the power converting device 10 is power generating equipment, of a type in which generated power varies in accordance with conditions of solar radiation, whose example includes a solar cell or plant-based power generation that generates power from natural energy. In the present embodiment, the power generating device 2 will be described as a solar cell.

The diode 20 is a backflow prevention diode including an anode connected to an output terminal of the power generating device 2 and a cathode connected to an input terminal of the converter 40. The diode 20 prevents backflow of the electric charge of the capacitor 30 to the power generating device 2.

The capacitor 30 is connected to a wiring line X, connecting the cathode of the diode 20 and the converter 40, without a switch element interposed therebetween. The capacitor 30 exhibits a voltage curve in which the voltage is gradually increased, by charge, from a lower limit voltage determined depending on the type of the capacitor, and the capacitor 30 is directly charged with power generated by the power generating device 2 via the diode 20. The capacitor 30 functions as a buffer that supports a voltage necessary for operation of the converter 40, during a normal time when the power generating device 2 generates sufficient power. The lower limit of the capacity of the capacitor 30 is determined from the loss of the converter 40, and the upper limit of the capacity of the capacitor 30 is determined by a charge time (an amount of power) desired to be secured during a time when the power generating device 2 generates low power (during a time of weak light in the case of a solar cell).

As the capacitor 30, a nano-hybrid capacitor (NHC) or a super redox capacitor (SRC) can be used. In a case where the nano-hybrid capacitor is used as the capacitor 30, the capacitor 30 can function as a filter for a low-frequency voltage ripple. By allowing the capacitor 30 to function as a filter, a load on an electrolytic capacitor in the converter 40 is reduced, and downsizing of the converter 40 and a long life of the converter 40 can be achieved.

The converter 40 is a converter that converts power generated by the power generating device 2 into power suitable for the load 3. In a case where the load 3 is an AC system, self-consumption, or the like, and power suitable therefor is AC power, a DC-AC converter (for example, a power conditioner) is employed as the converter 40. In a case where the load 3 is a storage battery or the like and power suitable therefor is DC power, a DC-DC converter (for example, a battery charger) is employed as the converter 40.

The converter 40 includes an input voltage sensor 41 that detects a voltage of the capacitor 30 (the wiring line X) (hereinafter, this voltage is referred to as a capacitor voltage Vc), which serves as an input voltage. The converter 40 starts operation when the capacitor voltage Vc increases and reaches a startup voltage, and stops the operation when the capacitor voltage Vc decreases and reaches a stop voltage VL that is set to be lower than the startup voltage.

The converter 40 includes an input current sensor 42 that detects an input current. The converter 40 operates with maximum power point tracking control (MPPT control) during the operation. The converter 40 changes the capacitor voltage Vc with the MPPT control, and receives power at an operating point of the power generating device 2 determined by the capacitor voltage Vc. As illustrated in Fig. 2, the converter 40 operates to target a maximum power point MPP at which the capacitor voltage Vc becomes a maximum power point voltage V_{MPP} and input power (input voltage × input current) becomes a maximum power P_{MAX}.

When the converter 40 increases the capacitor voltage Vc at a certain operating point and then the input power increases, next, the converter 40 also increases the capacitor voltage Vc (arrow A1). When the converter 40 increases the capacitor voltage Vc at a certain operating point and then the input power decreases, next, the converter 40 decreases the capacitor voltage Vc (arrow B1). When the converter 40 decreases the capacitor voltage Vc at a certain operating point and then the input power increases, next, the converter 40 also decreases the capacitor voltage Vc (arrow B2). When the converter 40 decreases the capacitor voltage Vc at a certain operating point and then the input power decreases, next, the converter 40 increases the capacitor voltage Vc (arrow A2).

In the power converting device 10, the capacitor 30 is connected, and thus the capacitor voltage Vc requires, for the change thereof, a charge-discharge time depending on the capacity of the capacitor 30. That is, when the capacitor voltage Vc is decreased with the MPPT control, power for discharging the capacitor 30 passes through the input current sensor 42 and is added to the input current. When the capacitor voltage Vc is increased with the MPPT control, power passing through the input current sensor 42 becomes zero (the input current becomes zero) due to power with which the capacitor 30 is charged.

The capacitor voltage Vc is based on the changing charge-discharge time, and the converter 40 performs the MPPT control by providing a settling time (for example, several seconds) that is a waiting time until which the capacitor voltage Vc is settled. When the converter 40 decreases the capacitor voltage Vc, the converter 40 uses, as a settling time, a time until which the discharge of the capacitor 30 converges, and determines an increase or a decrease in the input power after the settling time has elapsed. The time until which the discharge of the capacitor 30 converges is determined depending on a voltage variation width, in the MPPT control, in which the capacitor discharge is delayed up to a target value , the capacity of the capacitor 30, the capacity of the converter 40, or the like. When the converter 40 increases the capacitor voltage Vc, the converter 40 uses, as a settling time, a time during which an influence of the power with which the capacitor 30 is charged is eliminated, and determines an increase or a decrease in the input power after the settling time has elapsed. The time until which the charge of the capacitor 30 converges is determined depending on the voltage variation width in the MPPT control, the capacity of the capacitor 30, the capacity of the converter 40, or the like.

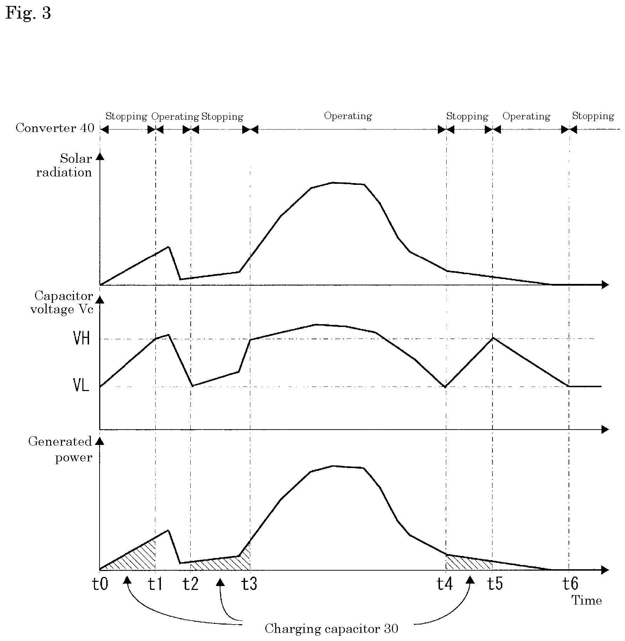

Next, a relationship between power, generated by the power generating device 2, and the capacitor voltage Vc will be described in detail with reference to Fig. 3. Fig. 3 illustrates, from the top, operation states of the converter 40, a time transition of solar radiation, a time transition of the voltage in the capacitor voltage Vc, and a time transition of the power generated by the power generating device 2.

### (From Time t0 to Time t1)

When there is no solar radiation before sunrise, the capacitor voltage Vc is the stop voltage VL and is lower than the startup voltage VH, and thus the converter 40 is in a state of stopping the operation. When solar radiation occurs at a time t0 with sunrise, the power generating device 2 starts power generation using the capacitor voltage Vc as an operating voltage, even while the converter 40 is stopped. The capacitor voltage Vc gradually increases as the capacitor 30 is charged with the power generated by the power generating device 2.

### (From Time t1 to Time t2)

When the capacitor voltage Vc increases to the startup voltage VH at a time t1, the converter 40 starts the operation with the MPPT control. When the solar radiation does not have sufficiently large intensity and the power generated by the power generating device 2 is low, the capacitor voltage Vc gradually decreases, with the MPPT control through the converter 40.

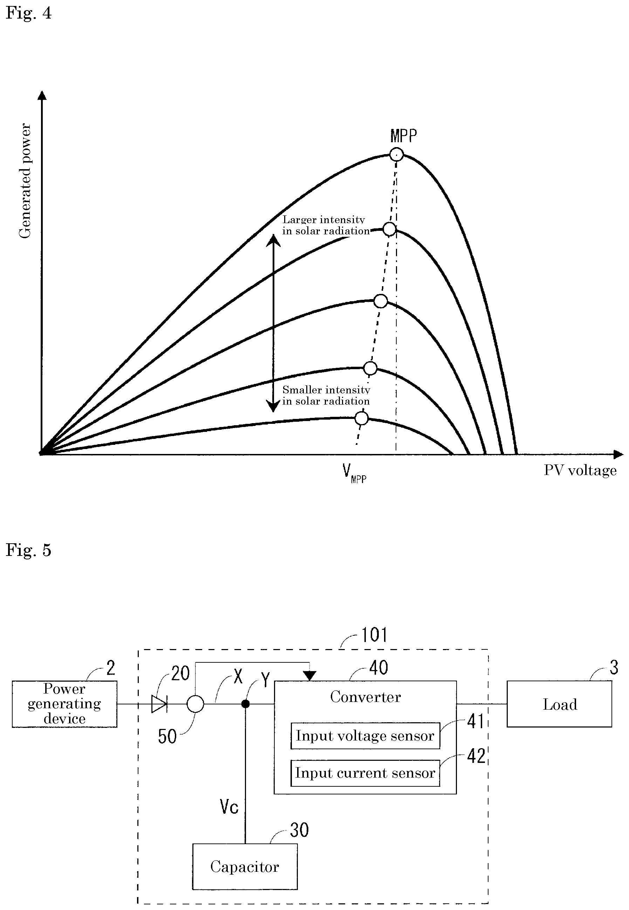

The decrease in the capacitor voltage Vc during the operation of the converter 40 is not an intentional discharge from the capacitor 30, but a result of tracking solar radiation (amount of power that can be generated), with MPPT control. In a P-V characteristic of the power generating device 2, the maximum power point voltage V_{MPP} decreases, as the intensity of the solar radiation becomes smaller to cause generated power to decrease, as illustrated in Fig. 4.

### (From Time t2 to Time t3)

When the capacitor voltage Vc decreases to the stop voltage VL at a time t2, the converter 40 stops the operation. Even when the converter 40 stops the operation, the power generation through the power generating device 2 is continued using the capacitor voltage Vc as the operating voltage, when there is solar radiation. The capacitor voltage Vc gradually increases as the capacitor 30 is charged with the power generated by the power generating device 2.

### (From Time t3 to Time t4)

When the capacitor voltage Vc increases to the startup voltage VH at a time t3, the converter 40 starts the operation with the MPPT control. When the solar radiation has sufficiently large intensity during daylight hours, the capacitor voltage Vc shifts at the maximum power point voltage V_{MPP} in accordance with the P-V characteristic of the power generating device 2, with the MPPT control through the converter 40. When the solar radiation has small intensity in a late afternoon, in a case where the solar radiation has sufficiently large intensity, the capacitor voltage Vc gradually decreases, with the MPPT control through the converter 40.

### (From Time t4 to Time t5)

When the capacitor voltage Vc decreases to the stop voltage VL at a time t4, the converter 40 stops the operation. Even when the converter 40 stops the operation, the power generation through the power generating device 2 is continued using the capacitor voltage Vc as the operating voltage, when there is solar radiation. The capacitor voltage Vc gradually increases as the capacitor 30 is charged with the power generated by the power generating device 2.

### (From Time t5 to Time t6)

When the capacitor voltage Vc increases to the startup voltage VH at a time t5, the converter 40 starts the operation with the MPPT control. When the solar radiation has small intensity in a late afternoon and the power generated by the power generating device 2 is low, the capacitor voltage Vc gradually decreases, with the MPPT control through the converter 40. When the capacitor voltage Vc decreases to the stop voltage VL at a time t6 when there is no solar radiation at sunset, the converter 40 stops the operation. Since there is no solar radiation, the power generation through the power generating device 2 is not continued and the capacitor voltage Vc is maintained at the stop voltage VL, and the next morning comes.

The power converting device 10 can cause the power generation through the power generating device 2 to start or continue even during each of operation stop periods (from t0 to t1, from t2 to t3, and from t4 to t5) when the operation of the converter 40 is stopped. With the generated power (weak power) during each of the operation stop periods indicated by the hatched areas in Fig. 3, the capacitor 30 is charged, and the generated power (weak power) is fully utilized by the converter 40. If the capacitor 30 is not connected, the power generating device 2 is also stopped along with a stop of the converter 40, and thus the generated power (weak power) during the operation stop period is unobtainable.

The startup voltage VH at which the converter 40 starts the operation is set to a value equal to or lower than the maximum power point voltage V_{MPP} in the P-V characteristic of the power generating device 2 and exceeding the stop voltage VL at which the converter 40 stops the operation.

As illustrated in Fig. 4, in the P-V characteristic of the power generating device 2, when the voltage exceeds the maximum power point voltage V_{MPP}, the generated power greatly decreases. Therefore, in a case where the startup voltage VH is set to exceed the maximum power point voltage V_{MPP}, when the capacitor voltage Vc exceeds the maximum power point voltage V_{MPP}, the generated power greatly decreases and a charge speed to the capacitor 30 greatly decreases. The decrease in the charge speed increases a time until which the capacitor voltage Vc reaches the startup voltage VH, and a period during which the converter 40 is stopped becomes longer. While the converter 40 is stopped, the MPPT control is not performed, and thus the power generated by the power generating device 2 decreases as compared with the case in which the converter 40 is in operation. Therefore, the power generation efficiency decreases.

In a case where the startup voltage VH is set to exceed the maximum power point voltage V_{MPP}, charge of the capacitor 30 is stopped during a time when solar radiation has small intensity, and there is a case in which the voltage does not reach the startup voltage VH. When the voltage does not reach the startup voltage VH, the converter 40 does not start the operation, and thus the power is not suppliable to the load 3. When the startup voltage VH is excessively increased, the number of series connections increases for the capacitor 30, which may lead to an increase in cost.

The stop voltage VL may be set to a discharge lower limit voltage of the capacitor 30. By setting the stop voltage VL to the discharge lower limit voltage of the capacitor 30, the capacity of the capacitor 30 is not wastefully consumed, and the capacitor 30 can be downsized.

In a case where the startup voltage VH and the stop voltage VL are close to each other (the startup voltage VH = the stop voltage VL + about 1 to 10 V), there is a possibility that the converter 40 frequently repeats the operation and the stop during a time when solar radiation has small intensity. The startup voltage VH can secure an interval between the startup voltage VH and the stop voltage VL, by being set to the maximum power point voltage V_{MPP} or a value slightly lower than the maximum power point voltage V_{MPP}.

### (Second Embodiment)

Fig. 5 is a diagram illustrating a circuitry configuration of a power converting device 101 according to another embodiment of the present invention. As illustrated in Fig. 5, a connection portion, connected to the capacitor 30, on the wiring line X is set as a connection portion Y. The power converting device 101 according to the present embodiment further includes a generated current sensor 50 on the wiring line X. The generated current sensor 50 is provided between the cathode of the diode 20 and the connection portion Y. The generated current sensor 50 detects a current generated by the power generating device 2.

In the power converting device 10 described in the first embodiment, the converter 40 includes the input current sensor 42. Thus, when the converter 40 changes the capacitor voltage Vc, the input current sensor 42 detects the sum of a current generated by the power generating device 2 and a current accompanying charge-discharge of the capacitor 30. The converter 40 performs the MPPT control on the basis of the sum of the current generated by the power generating device 2 and the current accompanying the charge-discharge of the capacitor 30.

On the other hand, in the present embodiment, the converter 40 performs MPPT control using a current value detected by the generated current sensor 50 and a voltage value detected by the input voltage sensor 41. The power converting device 101 performs the MPPT control on the basis of the current generated by the power generating device 2, whereby the power converting device 101 can track solar radiation (amount of power that can be generated) more accurately than the power converting device 10 described in the first embodiment, and an amount of generated power can be increased.

### (Third Embodiment)

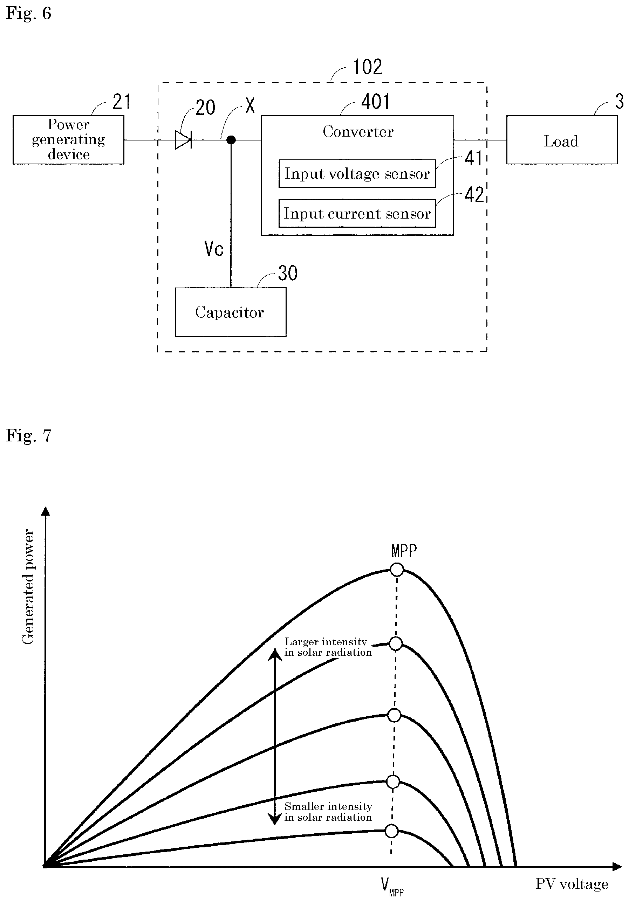

Fig. 6 is a diagram illustrating a circuitry configuration of a power converting device 102 according to another embodiment of the present invention. As illustrated in Fig. 7, a power generating device 21 according to the present embodiment has a P-V characteristic in which a maximum power point voltage V_{MPP} at which any generated power is the highest hardly changes regardless of change in solar radiation.

A converter 401 according to the present embodiment does not perform maximum power point tracking control (MPPT control). During a normal time when the power generating device 21 generates sufficient power, the capacitor voltage Vc is fixed to a voltage command value VA, and power generated by the power generating device 21 and output power of the converter 401 become equal to each other.

For the voltage command value VA, a voltage drop Vd across the wiring line X from the power generating device 21 to the converter 401 is set in advance, and the voltage command value VA is set to a value obtained by subtracting the voltage drop Vd from the maximum power point voltage V_{MPP} of the power generating device 21.

The maximum power point voltage V_{MPP} of the power generating device 21 is substantially constant regardless of change in solar radiation, as described above. Therefore, by performing voltage control so that the capacitor voltage Vc matches the voltage command value VA (the maximum power point voltage V_{MPP} - the voltage drop Vd), the power generating device 21 is operated at the maximum power point MPP.

The voltage command value VA may be calculated on the basis of an input current Iin to the converter 401, while the maximum power point voltage V_{MPP} and wiring impedance im of the wiring line X are used as known values. The input current to the converter 401 is detected by an input current sensor 41 built in the converter 401 or an external current sensor.

The voltage drop Vd across the wiring line X can be expressed by the wiring impedance im × the input current Iin. Therefore, the converter 401 calculates the voltage command value VA with the maximum power point voltage V_{MPP} - (the wiring impedance im × the input current Iin). It is possible to reflect the voltage drop Vd, across the wiring line X, that changes in accordance with the total amount of power generated by the power generating device 2. Thus, the power generating device 2 operates more accurately at the maximum power point MPP.

### (Summary)

The power converting device according to each embodiment of the present invention can also be described as follows.
(1) A power converting device 10 according to an embodiment of the present implementation is configured to cause power generated by a power generating device 2 to be converted into power suitable for a load 3. The power converting device 10 includes a diode 20 configured to prevent backflow to the power generating device 2 and a converter 40 configured to convert the power generated by the power generating device 2 into the power suitable for the load 3. The power converting device 10 includes a capacitor 30 connected to a wiring line connecting the diode and the converter 40. The converter 40 is configured to change a capacitor voltage Vc of the capacitor 30 with maximum power point control (MPPT control), and is configured to receive power at an operating point of the power generating device 2 determined by the capacitor voltage Vc.
   With the power converting device 10 according to the embodiment of the present invention, the capacitor 30 is charged with weak power from the power generating device 2 without using a switch element, and the power with which the capacitor 30 has been charged and the power generated by a solar cell can be efficiently utilized with the MPPT control.
(2) In the power converting device 10 according to (1), the converter 40 may be configured to operate, with the MPPT control, to target a maximum power point MPP at which input power becomes maximum power.
   With the power converting device 10 according to (2), it is possible to perform the MPPT control by using an input voltage and an input current to the power converting device 10.
(3) The power converting device 101 according to (1) may include a generated current sensor 50 provided between the diode 20 and a connection portion Y, connected to the capacitor 30, on the wiring line X, in which the converter 40 may be configured to perform the maximum power point control based on a current value detected by the generated current sensor 50.
   With the power converting device 101 according to (3), by performing the MPPT control based on a current generated by the power generating device 2, it is possible to accurately track solar radiation (amount of power that can be generated), and it is possible to increase an amount of generated power.
(4) In the power converting device 10 according to (2), in the MPPT control, the converter 40 may be configured to determine an increase or a decrease in the input power along with the change in the capacitor voltage Vc, after a settling time until which the capacitor voltage Vc is settled has elapsed, and determine an increasing or decreasing direction of the capacitor voltage Vc.
   With the power converting device 10 according to (4), it is possible to implement accurate MPPT control by avoiding an influence of charge-discharge of the capacitor 30.
(5) In the power converting device 10 according to any one of (1) to (4), the converter 40 may be configured to stop operating when the capacitor voltage Vc decreases to a stop voltage VL, and start operating when the capacitor voltage Vc increases to a startup voltage VH that is higher than the stop voltage VL.
   With the power converting device 10 according to (5), it is possible to operate the converter 40 in an efficient range.
(6) In the power converting device 10 according to (5), the startup voltage VH may be set to be equal to or lower than a maximum power point voltage V_{MPP} in a P-V characteristic of the power generating device 2.
   With the power converting device 10 according to (6), it is possible to reduce a time until which the capacitor voltage Vc reaches the startup voltage VH, which increases a period during which the converter 40 is operating, thereby improving power generation efficiency of the power generating device 2. The startup voltage VH can secure an interval between the startup voltage VH and the stop voltage VL, by being set to the maximum power point voltage V_{MPP} or a value slightly lower than the maximum power point voltage V_{MPP}.
(7) In the power converting device 10 according to (5) or (6), the stop voltage VL may be set to a discharge lower limit voltage of the capacitor 30.

With the power converting device 10 according to (7), the capacity of the capacitor 30 is not wastefully consumed, and the capacitor 30 can be downsized.

Although the present invention has been described above with reference to the specific embodiments, it goes without saying that the embodiments described above are merely examples and can be changed and implemented within the scope not departing from the gist of the present invention.

### DESCRIPTION OF REFERENCE SIGNS

2, 21: Power generating device
3: Load
10, 101, 102: Power converting device
20: Diode
30: Capacitor
40, 401: Converter
41: Input voltage sensor
42: Input current sensor
50: Current sensor
MPP: Maximum power point
P_{MAX}: Maximum power
VH: Startup voltage
VL: Stop voltage
V_{MPP}: Maximum power point voltage
X: Wiring line
Y: Connection portion

## Claims

1. A power converting device configured to cause power generated by a power generating device to be converted into power suitable for a load, the power converting device comprising:
a diode configured to prevent backflow to the power generating device;
a converter configured to convert the power generated by the power generating device into the power suitable for the load; and
a capacitor connected to a wiring line connecting the diode and the converter,
wherein the converter is configured to change a capacitor voltage of the capacitor with maximum power point control, and is configured to receive power at an operating point of the power generating device determined by the capacitor voltage.

2. The power converting device according to claim 1, wherein the converter is configured to operate, with the maximum power point control, to target a maximum power point at which input power becomes maximum power.

3. The power converting device according to claim 1, further comprising a current sensor provided between the diode and a connection portion, connected to the capacitor, on the wiring line,
wherein the converter is configured to perform the maximum power point control based on a current value detected by the current sensor.

4. The power converting device according to claim 2, wherein in the maximum power point control, the converter is configured to determine an increase or a decrease in the input power along with the change in the capacitor voltage, after a settling time until which the capacitor voltage is settled has elapsed, and determine an increasing or decreasing direction of the capacitor voltage.

5. The power converting device according to claim 1, wherein the converter is configured to stop operating when the capacitor voltage decreases to a stop voltage, and start operating when the capacitor voltage increases to a startup voltage that is higher than the stop voltage.

6. The power converting device according to claim 5, wherein the startup voltage is set to be equal to or lower than a maximum power point voltage in a P-V characteristic of the power generating device.

7. The power converting device according to claim 5 or 6, wherein the stop voltage is set to a discharge lower limit voltage of the capacitor.
